Europäisches Patentamt

European Patent Office

Office européen des brevets

(19)

(11) Numéro de publication : **0 071 514**
**B1**

(12) # FASCICULE DE BREVET EUROPÉEN

(45) Date de publication du fascicule du brevet :
30.10.85

(21) Numéro de dépôt : **82401340.3**

(22) Date de dépôt : **19.07.82**

(51) Int. Cl.⁴ : **H 04 L 27/06, H 04 L 27/22**

(54) **Circuit de régénération d'une onde porteuse.**

(30) Priorité : **23.07.81 FR 8114343**

(43) Date de publication de la demande :
**09.02.83 Bulletin 83/06**

(45) Mention de la délivrance du brevet :
**30.10.85 Bulletin 85/44**

(84) Etats contractants désignés :
**DE GB IT NL**

(56) Documents cités :
**US-A- 3 818 347**
**US-A- 4 134 075**
**US-A- 4 143 322**
**ELECTRONICS AND COMMUNICATIONS IN JAPAN,**
**vol. 56-A, no. 3, 1973, pages 1-9, Washington (USA);**
**H. YANAGIDAIRA et al.: "Modified 8-Phase modula-**
**tion system and its application to 4800-b/s data-**
**transmission modem"**
**W.C.LINDSEY: "Synchronization Systems in Commu-**
**nication and Control", 1972, Prentice-Hall, Engle-**
**wood Cliffs, New Jersey, Chapitre 3, pages 65-129;**
**"Systems employing the phase-lock or entrainment**
**principle".**

(73) Titulaire : **Leclert, Alain**
**Kerleo Ploulec'h**
**F-22300 Lannion (FR)**

**Verdot, Georges**
**32, rue de l'Aérodrome**
**F-22300 Lannion (FR)**

(72) Inventeur : **Leclert, Alain**
**Kerleo Ploulec'h**
**F-22300 Lannion (FR)**
Inventeur : **Verdot, Georges**
**32, rue de l'Aérodrome**
**F-22300 Lannion (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention a pour objet un circuit de régénération d'une onde porteuse. Elle trouve une application en transmission numérique et, plus particulièrement, dans le cas où, après avoir été transmise par modulation d'une onde électromagnétique, une information est restituée par démodulation cohérente. Le domaine d'application de l'invention est donc très large et couvre les modems de transmission de données, les faisceaux hertziens, les systèmes de communications spatiales, voire l'optique (dans le cas des liaisons hétérodynes).

La démodulation cohérente d'une onde suppose, de la part du récepteur qui la met en œuvre, la connaissance de la fréquence et de la phase de l'onde porteuse d'émission. A cette fin, une onde de démodulation est engendrée par un oscillateur commandable en tension (en abrégé et par la suite O.C.T.) et la tension de commande de cet oscillateur est fournie par un comparateur de phase qui délivre une tension d'erreur $\varepsilon(\varphi)$ qui est fonction de l'écart de phase $\varphi$ entre l'onde modulée et celle qui est engendrée par l'oscillateur. Compte tenu du fait que l'onde porteuse d'émission peut être modulée en amplitude et/ou en phase, la structure du comparateur de phase dépend de la modulation utilisée.

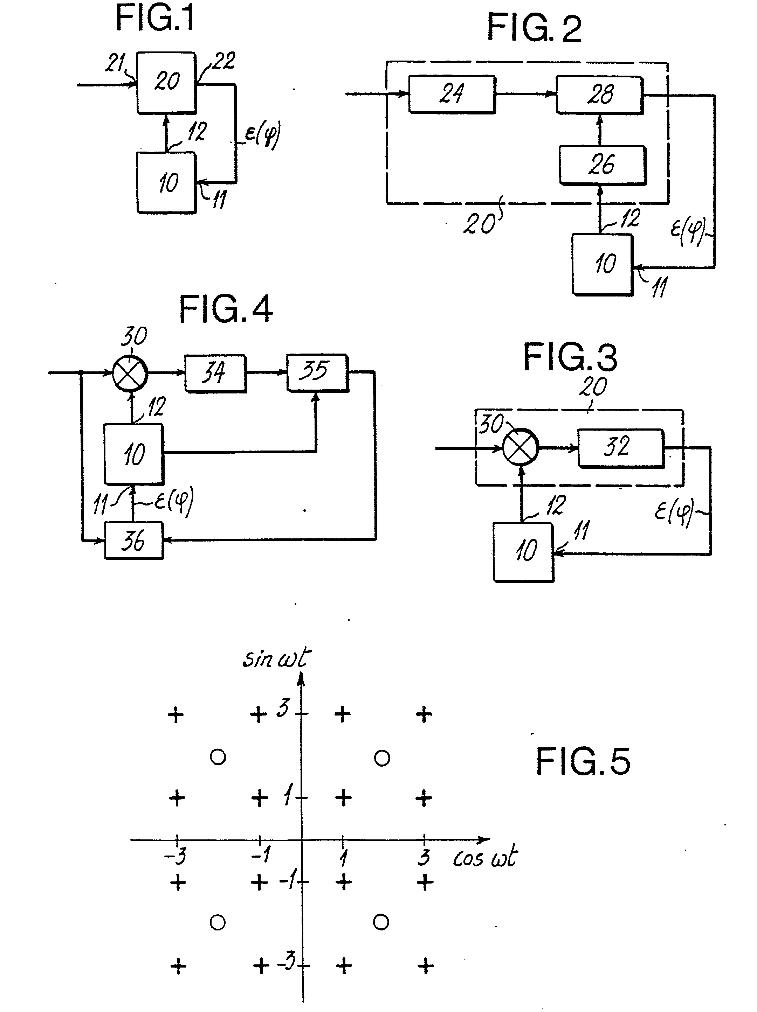

Le schéma général d'un circuit de régénération d'une onde porteuse est représenté sur la figure 1. Un OCT 10 possède une entrée de commande 11 et une sortie 12 et il délivre une onde appliquée à un organe 20 qui possède une autre entrée 21 recevant l'onde modulée et une sortie 22 délivrant un signal d'erreur $\varepsilon(\varphi)$. Ce signal est appliqué en retour à l'entrée 11 de l'OCT.

La caractéristique $\varepsilon(\varphi)$ du comparateur de phase 20 doit posséder les propriétés suivantes :

i) elle s'annule avec l'écart de phase $\varphi$ et change de signe avec $\varphi$ ;

ii) elle est périodique de période $2\pi/M$ où M est l'ordre de la symétrie de la modulation,

iii) elle ne s'annule qu'une fois par période.

Pour bien comprendre les caractéristiques de l'invention, il n'est pas inutile de rappeler les principaux types connus de structures utilisées pour régénérer ainsi une porteuse. Le cas de la modulation de phase (en abrégé MDP) sera d'abord abordé, puis celui de la modulation d'amplitude dans sa variante à deux ondes en quadrature (en abrégé MAQ).

Dans les systèmes à modulation de phase, plusieurs boucles sont connues qui vont être décrites rapidement en liaison avec les figures 2 à 4. On suppose que cette modulation fait intervenir M états de phase, M étant en général égal à 4, 8 ou plus.

Dans un premier type de boucle, on multiplie la fréquence, donc la phase, par M, supprimant par là la modulation, et l'on asservit l'OCT sur l'onde pure ainsi créée. Une boucle conforme à ce principe est représentée sur la figure 2. Elle comprend deux multiplieurs par M, respectivement 24 et 26 tous deux reliés à un comparateur de phase 28.

Dans un second type de boucle, dit de COSTAS, on forme un signal d'erreur de la forme sin $M\varphi$, en travaillant en bande de base, c'est-à-dire sur le signal démodulé. La figure 3 représente la structure correspondante. Elle comprend un démodulateur 30 et un circuit de traitement en bande de base 32 apte à élaborer le signal d'erreur en question.

Dans un troisième type de boucle, on compare la phase du signal à celle de sa version remodulée. Une telle boucle est représentée sur la figure 4. En plus de l'OCT 10 et du démodulateur 30, elle comprend un circuit de décision 34 destiné à régénérer l'information contenue dans le signal démodulé, ce circuit étant suivi d'un remodulateur 35. Un comparateur 36 reçoit l'onde modulée et l'onde remodulée.

Dans un autre type de boucle non illustré parce que très voisin du précédent, on réalise le traitement de remodulation en bande de base, comme pour la boucle de COSTAS.

Enfin, dans la boucle dite de COSTAS numérique, le signal d'erreur formé est du type sgn (sin $M\varphi$), où sgn représente le signe de la quantité qui suit, cette notation étant d'ailleurs employée dans toute la suite de la description.

Cette dernière boucle présente l'avantage d'une réalisation simple (les multiplications de signes étant faites par des portes logiques OU-exclusif) et de posséder de bonnes performances (la pente $d\varepsilon/d\varphi$ du comparateur de phase idéal correspondant serait infinie en l'absence de bruit).

En ce qui concerne maintenant les boucles de régénération de porteuse utilisables avec le second type de modulation dite MAQ, elles sont illustrées sur les figures 5 à 7. La modulation MAQ 16 peut être considérée comme la superposition de deux ondes en quadrature, modulées chacune selon quatre niveaux d'amplitude. Les 16 états de modulation possibles peuvent être représentés sur un diagramme de Fresnel appelé aussi constellation, qui est représenté sur la figure 5. Sur ce diagramme, chaque axe représente une onde dont l'amplitude peut prendre l'un quelconque de quatre niveaux d'amplitude 3, 1, $-1$ et $-3$ et chaque état est représenté par une croix.

Plusieurs boucles fonctionnant en MAQ 16 sont connues. Certaines sont à remodulation, comme celles de la figure 4, avec cependant une structure plus complexe puisque la modulation MAQ est plus complexe que la modulation MDP.

Pour simplifier la réalisation d'une telle boucle, on peut ne pas comparer le signal à sa version remodulée, mais au signal à quatre états de phase correspondant à la moyenne des états de chaque quadrant. Ces quatre états moyens sont représentés sur le diagramme de la figure 5 par un cercle situé dans chaque quadrant.

2

Plus simple que la boucle précédente, cette boucle introduit néanmoins un « bruit de modulation » puisque le signal d'erreur ne s'annule qu'en moyenne pour $\varphi = 0$.

Selon un autre type de boucle, du genre boucle de COSTAS numérique, on traite le signal MAQ 16 comme s'il s'agissait d'un signal MDP 4. De réalisation plus simple que la précédente, cette boucle garde malheureusement le défaut du bruit de modulation.

Selon un autre type de boucle, dit de COSTAS numérique avec porte sélective, le signal d'erreur n'est construit qu'à partir des seuls états diagonaux de la constellation, correspondant à des phases de 45°, 135°, 225° et 315° qui sont celles d'une modulation MDP 4. On supprime ainsi le bruit de modulation par élimination, au moyen d'une porte sélective, de la contribution des états non diagonaux, au signal d'erreur. Cette boucle est décrite dans l'article de Horikawa et al intitulé « Design and performance of a 200 Mbit/s 16 QAM digital radio system » publié dans la revue IEEE Trans COM, 27 décembre 79, p. 1953.

C'est à ce jour la boucle la plus performante.

Pour ce qui est des modulations MAQ 32 et MAQ 64, aucune structure n'a encore été proposée, hormis l'extension à ces modulations des techniques employées pour la modulation MAQ 16.

Tous ces circuits de l'art antérieur présentent de multiples inconvénients :

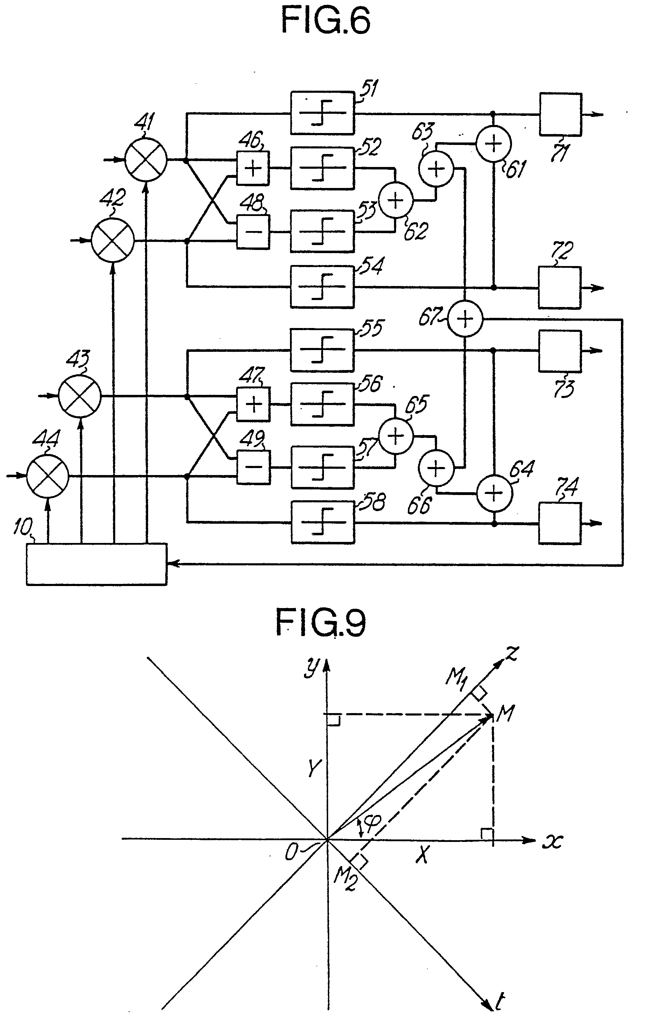

1) En MDP 8, tout d'abord, la boucle de COSTAS numérique conduit à une structure très lourde comme on peut en juger par le schéma de la figure 6. La boucle représentée comprend quatre démodulateurs 41, 42, 43 et 44, travaillant avec des ondes déphasées de 45° les unes des autres, deux sommateurs 46, 47, deux soustracteurs 48, 49, huit comparateurs à seuil 51 à 58, sept portes logiques OU-exclusif 61 à 67 et quatre bascules 71 à 74. Dans une variante plus simple, on peut n'utiliser que deux démodulateurs fonctionnant en quadrature, avec un additionneur, un soustracteur et deux comparateurs supplémentaires.

Ce type de structure est décrit dans l'article de HOGGE publié dans la revue « IEEE COM » 26, n° 5, mai 1978, pages 528-533.

Avec une telle boucle on forme un signal d'erreur qui, pour la modulation MDP 4, est de la forme :

$$\varepsilon(\varphi) = \text{sgn } (X) \text{ sgn } (Y) \text{ sgn } (X - Y) \text{ sgn } (X + Y)$$

2) En MAQ 16, les inconvénients sont les suivants :

— dans le cas de la boucle à remodulation partielle et de la boucle de COSTAS numérique classique, il y a apparition d'un bruit de modulation : le signal d'erreur ne s'annule avec l'erreur de phase qu'en moyenne ;

— dans le cas de la boucle de COSTAS numérique avec porte sélective, le système peut ne pas tolérer une situation dans laquelle seuls les signaux hors diagonale sont transmis ;

— même dans le cas des boucles de COSTAS numériques, il faut effectuer des soustractions de signaux analogiques, ce qui pose des problèmes de réalisation.

Le but de l'invention est de remédier à tous ces inconvénients. De façon plus précise, le but de l'invention est de :

— fournir une structure universelle de boucle de régénération de porteuse qui soit appropriée à la fois aux modulations MDP et aux modulations MAQ (alors que généralement, les traitements sont différents) ;

— proposer une structure de démodulateur MDP 8 plus simple que celui qui utilise la boucle de COSTAS ;

— obtenir de bonnes performances en MAQ 16 (la pente du comparateur idéal proposé est double de celle de la boucle de COSTAS avec porte sélective) et utiliser tous les points de la constellation, diagonaux et non diagonaux ;

— proposer une structure de démodulation en MAQ 32 et MAQ 64.

A cette fin, l'invention propose d'utiliser des moyens qui sont aptes à former un signal d'erreur $\varepsilon(\varphi)$ qui est donné par l'expression suivante :

$$\varepsilon(\varphi) = \text{sgn } (X - \hat{X}) \text{ sgn } (Y) - \text{sgn } (Y - \hat{Y}) \text{ sgn } (X)$$

où $\hat{X}$ et $\hat{Y}$ sont des signaux reconstruits correspondant aux signaux démodulés X et Y obtenus par démodulations en quadrature.

Pour cela, l'invention utilise deux comparateurs à seuil nul (pour former les quantités sgn (X) et sgn (Y), deux circuits de reconstruction (pour former $\hat{X}$ et $\hat{Y}$) et un soustracteur (ou un additionneur à une entrée inversée), pour former la différence des deux produits formés. Le circuit de l'invention s'apparente donc à un démodulateur du type de celui décrit dans US-A-4 134 075. Mais dans ce document, on forme un autre signal d'erreur que celui de l'invention, ce qui nécessite des moyens de quantification. L'invention propose un circuit plus simple, dont les performances en ce qui concerne la pente de $\varepsilon(\varphi)$ en fonction de $\varphi$, sont meilleures.

Le circuit de l'invention est conforme à la revendication 1 donnée ci-après.

Les caractéristiques de l'invention apparaîtront mieux après la description qui suit, d'exemples de réalisation donnés à titre explicatif et nullement limitatif. Cette description se réfère à des dessins annexés dont certains ont déjà été décrits, et sur lesquels :

la figure 1 représente la structure d'une boucle à verrouillage de phase,

la figure 2 représente une boucle à multiplication,

la figure 3 représente une boucle de COSTAS, à traitement en bande de base,

la figure 4 représente une boucle à remodulation,

la figure 5 illustre les 16 états de modulation possibles dans la modulation MAQ 16,

la figure 6 représente une boucle de COSTAS numérique en modulation MDP 8,

la figure 7 représente la structure générale du circuit de l'invention,

la figure 8 représente un mode particulier de réalisation d'un circuit de décision et de reconstruction en modulation MAQ 16,

la figure 9 est un diagramme illustrant le principe de modulation MDP 8,

la figure 10 illustre un mode particulier de réalisation d'un circuit de décision et de reconstruction en modulation MDP 8,

la figure 11 donne la caractéristique d'un circuit de l'invention travaillant en modulation MDP 4,

la figure 12 donne cette caractéristique pour la modulation MDP 8,

la figure 13 donne cette caractéristique pour la modulation MAQ 16,

la figure 14 donne cette caractéristique pour la modulation MAQ 32,

la figure 15 donne cette caractéristique pour la modulation MAQ 64,

la figure 16 donne les caractéristiques en modulation MDP 4 d'une boucle de COSTAS numérique et d'un circuit conforme à l'invention.

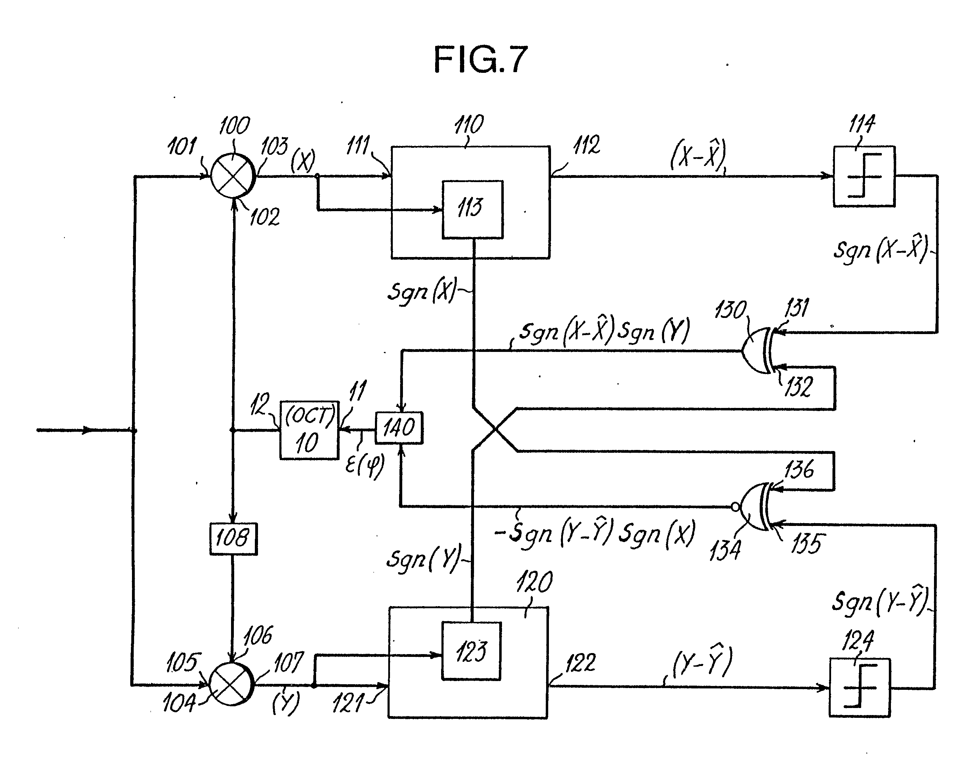

Le circuit représenté sur la figure 7 comprend, de manière connue, un OCT 10 avec une entrée de commande 11 recevant un signal $\varepsilon(\varphi)$ et une sortie 12 délivrant une onde dont la phase dépend du signal de commande. Le circuit comprend encore deux démodulateurs 100 et 104, le premier à deux entrées, 101 et 102, recevant respectivement l'onde modulée et l'onde délivrée par l'OCT, et à une sortie 103 délivrant un signal X, le second à deux entrées également, 105 et 106, recevant respectivement l'onde modulée et l'onde émanant de l'OCT préalablement déphasée de 90° par un déphaseur 108 et à une sortie 107 délivrant un signal Y.

Le circuit représenté comprend encore des moyens de traitement du signal X constitués par :

— un premier circuit 110 de décision et de reconstruction à une entrée 111 reliée au premier démodulateur 100 et à une sortie 112 délivrant un signal différence $(X - \hat{X})$, où $\hat{X}$ est un signal reconstruit à partir du signal X,

— un comparateur à seuil nul 113 à une entrée reliée au premier modulateur 100 et à une sortie délivrant un signal déterminant le signe de X, soit sgn (X),

— un comparateur à seuil nul 114 relié à la sortie 112 du circuit de décision et de reconstruction 110 et déterminant le signe de la différence $X - \hat{X}$, soit sgn $(X - \hat{X})$.

Le circuit comprend encore, et de la même manière, des moyens de traitement du signal Y constitués par :

— un second circuit de décision et de reconstruction 120 à une entrée 121 reliée au second démodulateur 104 et à une sortie 122 délivrant un signal différence $(Y - \hat{Y})$, où $\hat{Y}$ est un signal reconstruit à partir du signal Y,

— un comparateur à seuil nul 123 à une entrée reliée au second démodulateur 104 et à une sortie délivrant un signal déterminant le signe de Y, soit sgn (Y),

— un comparateur à seuil nul 124 relié à la sortie 122 du second circuit de décision et de reconstruction 120 et déterminant le signe de la différence $Y - \hat{Y}$, soit sgn $(Y - \hat{Y})$.

Il est fréquent dans la pratique, que les circuits de décision et de reconstruction 110 et 120 comprennent par eux mêmes des moyens de détermination du signe de X et de Y. C'est la raison pour laquelle les moyens 113 et 123 sont représentés à l'intérieur des circuits 110 et 120.

Le circuit de l'invention comprend encore :

— une première porte logique de type OU-exclusif 130 à deux entrées 131 et 132, la première reliée à la sortie du comparateur 114 et recevant sgn $(X - \hat{X})$ et la seconde à la sortie du comparateur 123 et recevant sgn (Y), cette première porte 130 délivrant, sur une sortie, un signal sgn $(X - \hat{X})$ sgn (Y),

— une seconde porte 134 du type NON-OU-exclusif à deux entrées 135 et 136, la première reliée à la sortie du comparateur 124 et recevant sgn $(Y - \hat{Y})$ et la seconde à la sortie du comparateur 113 et recevant sgn (X), cette seconde porte délivrant sur une sortie un signal $-$ sgn $(Y - \hat{Y})$ sgn (X).

Le circuit comprend enfin un additionneur 140 à deux entrées, la première reliée à la sortie de la première porte 130, la seconde à la sortie de la seconde porte 134, cet additionneur délivrant sur une sortie un signal sgn $(X - \hat{X})$ sgn (Y) $-$ sgn $(Y - \hat{Y})$ sgn (X), qui constitue le signal d'erreur $\varepsilon(\varphi)$, cette sortie étant reliée à l'entrée 11 de commande de l'oscillateur commandable en tension 10.

Il va de soi qu'on ne sortirait pas du cadre de l'invention en utilisant, comme porte logique 134, une porte OU-exclusif identique à la porte 130. Dans ce cas, la sortie de la porte en question ne serait plus inversée, mais il suffirait d'utiliser un soustracteur aux lieu et place de l'additionneur 140. Cependant, la variante décrite est plus simple puisque requérant un additionneur.

A titre explicatif, deux exemples de circuit de décision et de reconstruction tels que 110 et 120 vont être décrits, respectivement dans le cas des modulations MAQ 16 et MDP 8.

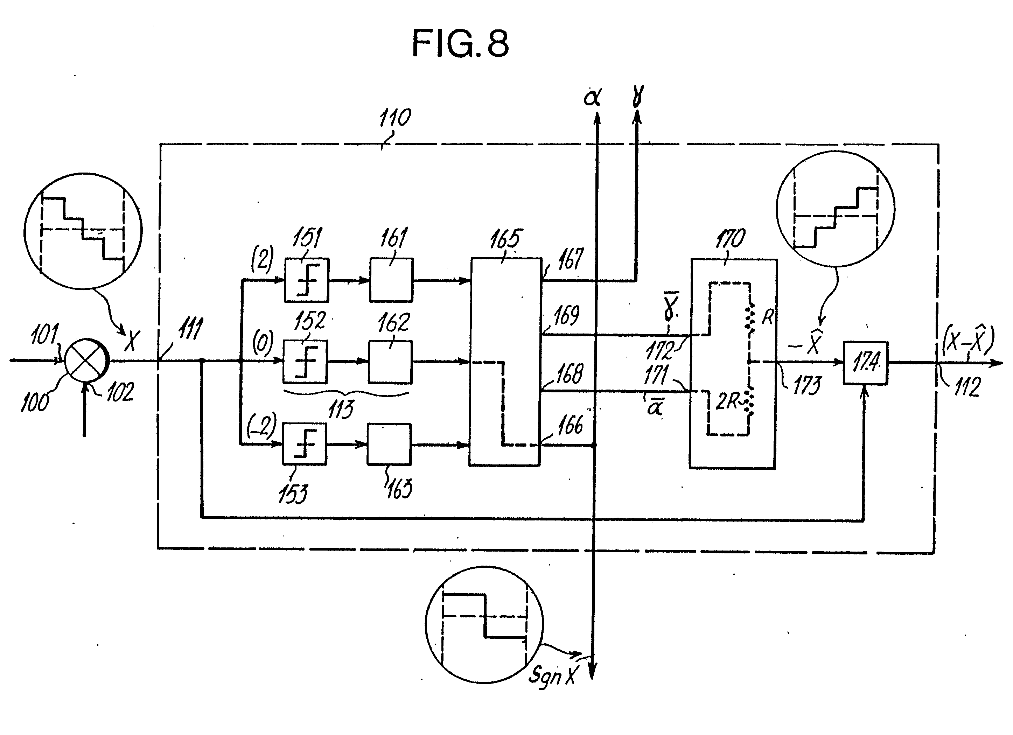

Dans le cas de la modulation MAQ 16, tout d'abord, un circuit possible est illustré par la figure 8. Il correspond au circuit 110 de la figure 7 traitant le signal X. Le circuit 120 est identique mais traite le signal Y.

Le circuit représenté comprend trois comparateurs à seuil 151, 152, 153, ces seuils étant respectivement 2, 0 et − 2. Chaque comparateur est suivi d'une bascule, respectivement 161, 162, 163. Les sorties de ces bascules sont reliées à un circuit logique 165 apte à traduire l'état de trois bascules en un nombre à deux éléments binaires α et γ. Ces deux éléments apparaissent sur des sorties 166 et 167 et les éléments complémentaires $\overline{\alpha}$ et $\overline{\gamma}$ sur des sorties 168 et 169.

Le circuit représenté comprend encore un circuit de reconstruction 170 à deux entrées 171 et 172 recevant respectivement les éléments binaires complémentaires $\overline{\alpha}$ et $\overline{\gamma}$ et à une sortie 173 délivrant un signal − X̂. Enfin, un additionneur 174 à deux entrées reliées à la sortie 173 du convertisseur et à l'entrée 111 complète le circuit.

Le fonctionnement de ce circuit est le suivant. Dans une modulation MAQ 16, le modulateur, pour chacune des deux porteuses en quadrature, fait correspondre à un nombre à deux éléments binaires, un état d'amplitude pris parmi 4 (dans l'exemple considéré + 3, + 1, − 1, − 3). Le récepteur doit régénérer cette information numérique à partir de l'onde démodulée. A cette fin, le circuit 110 doit remplir tout d'abord une fonction de décision afin de restituer l'information numérique en question, c'est-à-dire les deux éléments binaires d'origine et ce à l'aide du signal démodulé X ; puis le circuit doit effectuer une reconstruction apte à former un signal analogique X̂ à partir des deux éléments binaires en question. Dans le circuit de la figure 8, la prise de décision est effectuée par les trois comparateurs à seuil 151 à 153 qui comparent le signal démodulé X à des seuils respectifs + 2, 0, − 2. Grâce à ces moyens, il est possible de trouver lequel des quatre niveaux + 3, + 1, − 1, − 3 est présent sur le signal modulé. Les bascules 161 à 163 ont pour rôle de mémoriser l'état des comparateurs. Le circuit 165 traduit ces états en un nombre à deux éléments binaires α et γ.

On remarquera que le comparateur à zéro 152 et sa bascule associée 162, permettent à eux seuls de détecter le signe de X. Ce comparateur et cette bascule constituent donc, en l'occurrence, le moyen 113 délivrant le signal sgnX. En pratique, c'est l'élément binaire α qui reflète ce signe, de sorte que sgnX peut être prélevé sur la sortie 166 du circuit logique 165.

A partir des éléments binaires α et γ, le signal à quatre niveaux peut être reconstruit aisément. C'est la fonction du circuit 170. Ce dernier peut être un sommateur à deux résistances dont l'une a une valeur double de l'autre, les tensions correspondant aux éléments binaires étant appliquées aux extrémités des résistances. Le signal analogique X̂ est alors prélevé, entre les résistances (ce moyen est représenté en pointillé sur la figure 8).

Dans la mesure où l'on doit former la différence X − X̂, il est plus simple de former directement − X̂ au lieu de X̂ car il suffit alors d'ajouter X à (− X̂) pour obtenir la différence recherchée, ce qui permet d'employer un sommateur 174 au lieu d'un soustracteur, plus complexe. Dans ces conditions, pour obtenir − X̂, le circuit de reconstruction 170 est relié non pas aux sorties 166 et 167 du circuit 165, mais aux sorties complémentaires 168 et 169.

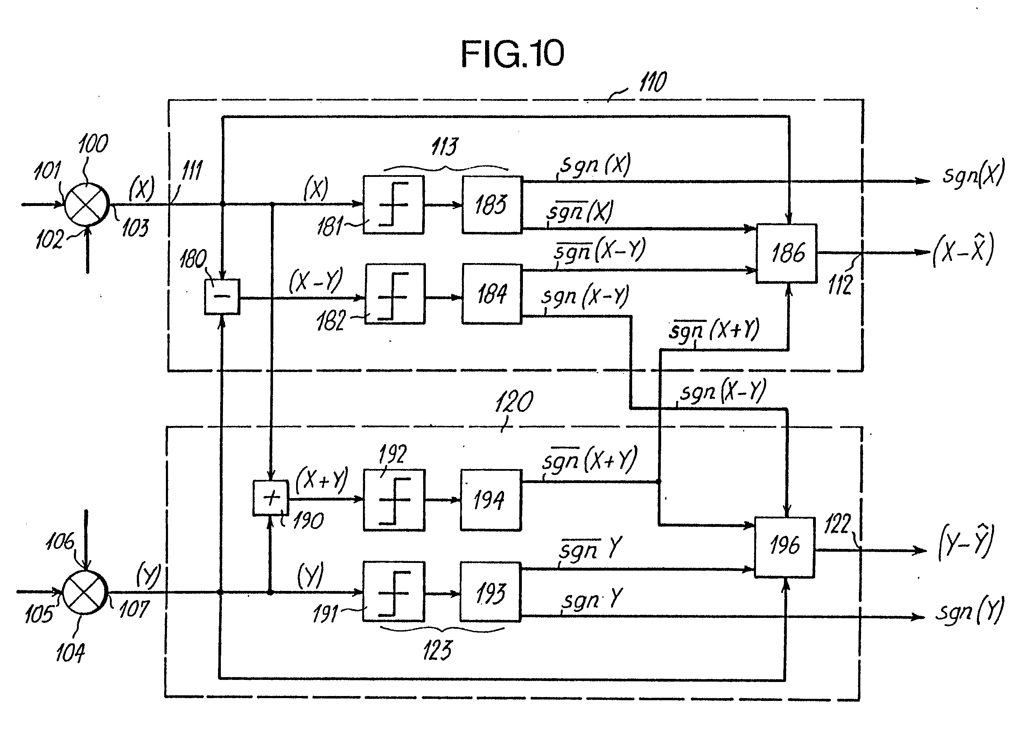

En modulation MDP 8 maintenant, le modulateur associe à chaque état de phase un triplet d'éléments binaires. A la réception, la démodulation consiste à utiliser quatre démodulateurs attaqués par des ondes dont les phases respectives sont 0°, 45°, 90° et 135°. Dans un plan de Fresnel, tel que celui de la figure 9, ces ondes correspondent aux axes Ox, Oy, Oz et Ot. Le vecteur $\overrightarrow{OM}$, d'angle polaire φ, représente l'onde à démoduler. La démodulation se traduit, dans ce plan de Fresnel, par la projection du point M sur les quatre axes. Les deux projections sur Ox et Oy ne sont autres que les sorties démodulées X et Y. Si l'on calcule $OM_1$ sortie du démodulateur à 45°, et $OM_2$, sortie du démodulateur à 135°, on trouve sans difficulté :

$$OM_1 = X + Y/\sqrt{2} \qquad OM_2 = X − Y/\sqrt{2}$$

Cela signifie que, au lieu d'utiliser les deux démodulateurs à 45° et 135°, on peut, à partir des sorties X et Y des démodulateurs à 0° et 90°, construire les quantités $X + Y/\sqrt{2}$ et $X − Y/\sqrt{2}$ et obtenir les mêmes informations.

Par ailleurs, les informations sgnX et sgnY permettent de déterminer un quadrant parmi les quatre quadrants (0°-90°) (90°-180°) (180°-270°) (270°-360°) alors que les informations sgn (X − Y) et sgn (X + Y) permettent de déterminer un autre quadrant pris parmi les quadrants (315°-45°) (45°-135°) (135°-225°) (225°-315°). Ces deux déterminations définissent un secteur circulaire d'angle au sommet 45° et permettent de savoir laquelle des huit phases possibles a été émise.

Pour reconstruire les signaux X̂ et Ŷ à partir des signaux démodulés X et Y, il suffit alors de former les quantités :

$$\hat{X} = [\text{sgn} (X + Y) + \text{sgn} (X − Y)]/\sqrt{2} + \text{sgn}X$$

$$\hat{Y} = [\text{sgn} (X + Y) − \text{sgn} (X − Y)]/\sqrt{2} + \text{sgn}Y$$

Comme en pratique ce sont les quantités (X − X̂) et (Y − Ŷ) qui sont recherchées, au lieu de reconstruire X̂ et Ŷ on s'attache plutôt à reconstruire − X̂ et − Ŷ comme dans le cas précédent, ce qui permet, par simple addition avec X et Y, d'obtenir les différences recherchées.

On observera que la reconstruction de X̂ et Ŷ ne nécessite que la connaissance des signes de certaines quantités et non, comme en modulation MAQ 16, la connaissance des éléments binaires correspondant à l'état de phase traité. En conséquence, un circuit de reconstruction en modulation MDP 8 ne comprend pas obligatoirement les circuits logiques permettant l'extraction des éléments binaires.

Dans ces conditions, les circuits de décision et de reconstruction 110 et 120 peuvent se présenter comme illustré sur la figure 10.

Le circuit 110 tout d'abord comprend un soustracteur 180, qui reçoit les signaux démodulés X et Y et délivre un signal X − Y, deux comparateurs à seuil nul 181, 182 recevant respectivement les signaux X et (X − Y) et délivrant, par l'intermédiaire de bascules associées 183 et 184, respectivement les signes de X et de (X − Y). En fait, pour les raisons indiquées plus haut, on utilise des sorties complémentaires qui délivrent $\overline{sgn}$ (X) et $\overline{sgn}$ (X − Y). Le circuit 110 se termine par un additionneur 186 à quatre entrées recevant respectivement X, $\overline{sgn}$ (X), $\overline{sgn}$ (X − Y) ainsi que $\overline{sgn}$ (X + Y) provenant du second circuit de décision et de reconstruction 120. L'additionneur 186 forme directement la différence X − X̂.

On observera que le comparateur 181 et la bascule 183 associée forment les moyens 113 de détermination du signe de X dont il a été question dans la définition générique de l'invention.

Quant au circuit 120, il comprend un additionneur 190 à deux entrées recevant les signaux démodulés X et Y, deux comparateurs 191, 192 reliés respectivement au démodulateur 104 et à l'additionneur 190, ces comparateurs étant associés à deux bascules 193, 194. La bascule 193 délivre sgnY et son complément $\overline{sgn}$Y. La bascule 194 délivre $\overline{sgn}$(X + Y), qui est utilisé par ailleurs dans l'additionneur 186 du circuit 110. Le circuit 120 comprend en outre un additionneur 196, recevant respectivement Y, $\overline{sgn}$Y et $\overline{sgn}$ (X + Y) ainsi que sgn (X − Y) provenant de la bascule 184 du circuit 110. Cet additionneur forme directement la différence (Y − Ŷ).

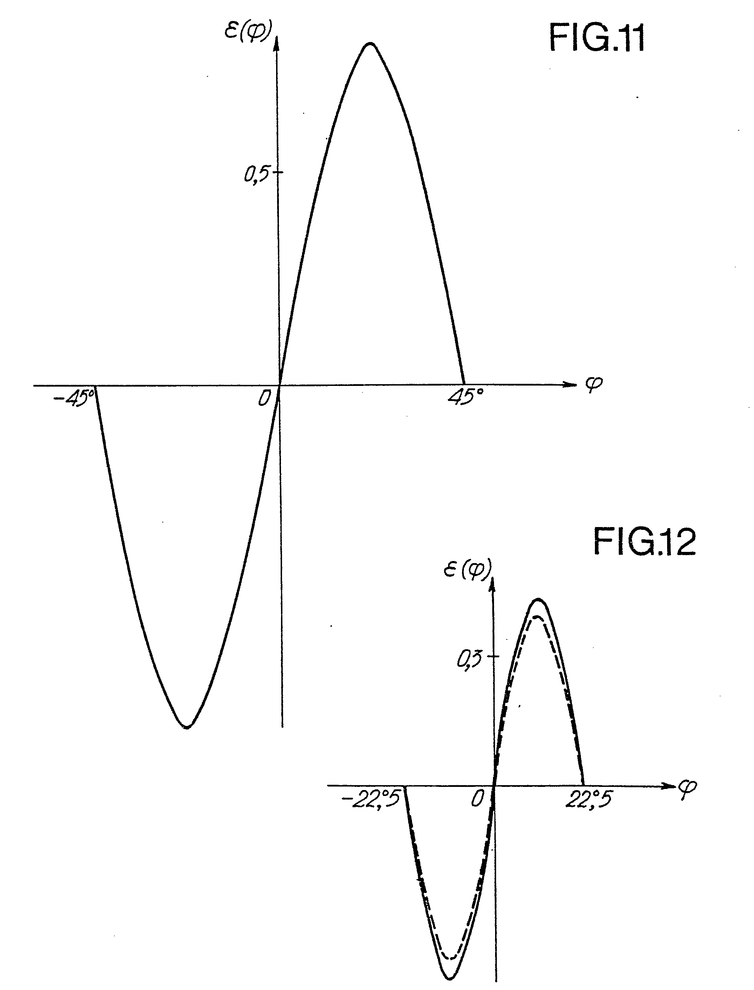

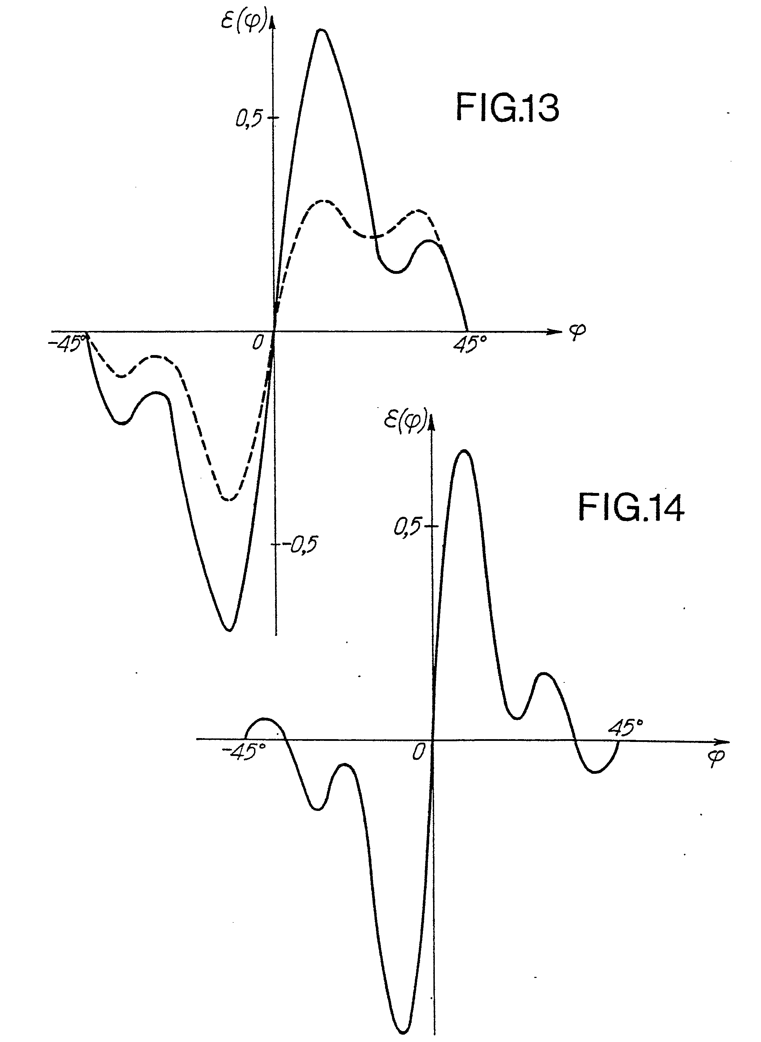

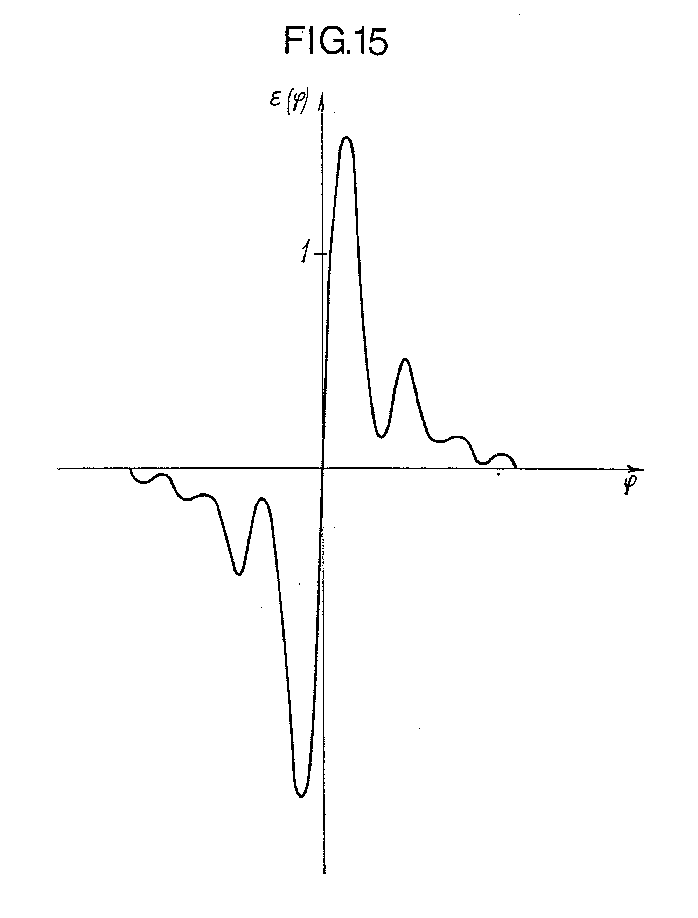

Les figures 11 à 15 illustrent les résultats obtenus avec le circuit de l'invention. Elles représentent la caractéristique du circuit, c'est-à-dire la variation du signal d'erreur ε (φ) en fonction de l'écart de phase φ. Elles se rapportent respectivement aux cas des modulations :
— MDP 4 (figure 11) (rapport onde porteuse à bruit : 10 dB),
— MDP 8 (figure 12) (rapport onde porteuse à bruit : 15 dB),
— MAQ 16 (figure 13) (rapport onde porteuse à bruit : 19 dB),
— MAQ 32 (figure 14) (rapport onde porteuse à bruit : 20 dB),
— MAQ 64 (figure 15) (rapport onde porteuse à bruit : 30 dB).

Sur toutes ces figures, les courbes en trait continu sont des courbes théoriques et celles en trait interrompu des courbes expérimentales.

On observera que la propriété iii) mentionnée plus haut pour le signal d'erreur, n'est pas satisfaite pour la modulation MAQ 32, car le signal possède un zéro pour φ = 45°. Cependant, le minimum local de la courbe étant de faible amplitude, un léger décalage de tension sur l'oscillateur permet de supprimer aisément ce zéro parasite.

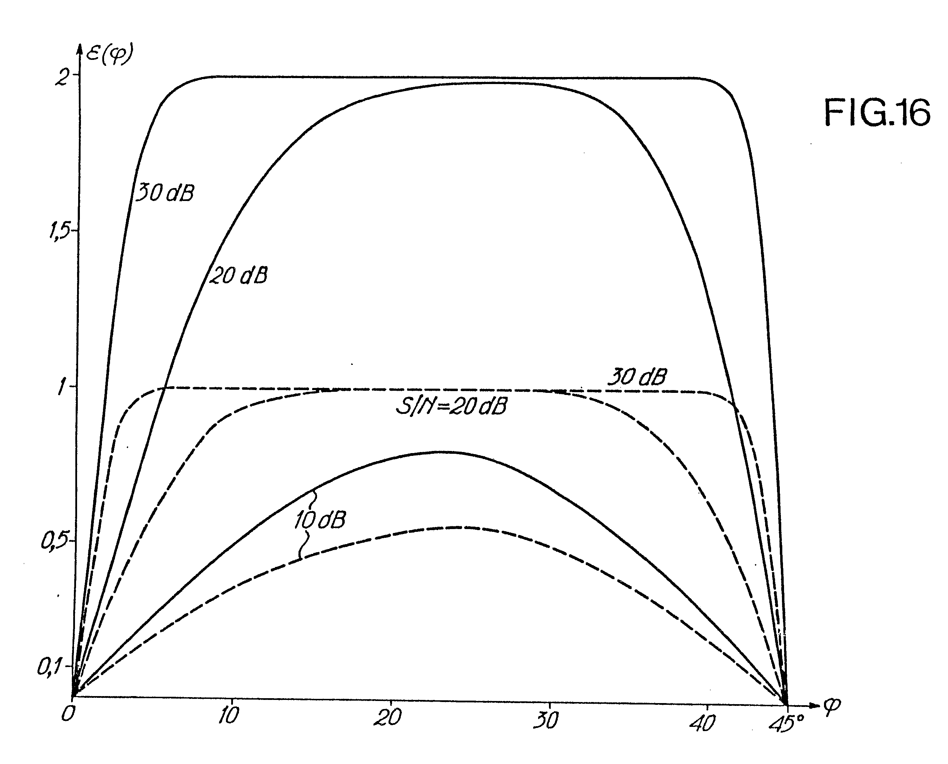

La figure 16, enfin, permet d'effectuer une comparaison entre les résultats procurés par le circuit de l'invention en modulation MDP 4 et ceux que l'on obtient avec une boucle de COSTAS numérique. Les courbes correspondent à plusieurs rapports porteuse à bruit. Celles qui sont tracées en trait continu correspondent au circuit de l'invention et celles en trait interrompu à la boucle de l'art antérieur.

On voit, après cette description, que l'invention procure de nombreux avantages :
— une meilleure pente dε (φ) dφ qu'avec les autres circuits,
— une utilisation de tous les points de la constellation (en MDP et en MAQ),
— une réalisation technologique plus simple (utilisation d'additionneurs et de portes OU-exclusif),
— des performances en MDP 4 et MDP 8 identiques à celles de la boucle de COSTAS numérique classique, mais avec une pente dε/dφ meilleure.

## Revendications

1. Circuit de régénération d'une onde porteuse à partir d'une onde modulée, comprenant un oscillateur commandable en tension (10) ayant une entrée de commande (11) et une sortie délivrant ladite onde porteuse, un premier démodulateur (100) à deux entrées, l'une recevant l'onde modulée et l'autre étant reliée à la sortie de l'oscillateur, un second démodulateur (104) à deux entrées, l'une recevant l'onde modulée et l'autre étant reliée à l'oscillateur à travers un déphaseur de 90° (108), chaque démodulateur délivrant un signal démodulé, respectivement X pour le premier et Y pour le second, et des moyens de traitement de ces signaux X et Y pour engendrer deux signaux appliqués à un additionneur (140), lequel délivre un signal d'erreur ε(φ) qui est appliqué à l'entrée (11) de l'oscillateur et qui est apte à modifier la phase de celui-ci pour la rendre égale à celle de l'onde modulée, ces moyens de traitement comprenant :
— un premier circuit (110) de décision et de reconstruction à une entrée (111) reliée au premier démodulateur (100) et à une sortie (112), ce circuit incorporant un comparateur à seuil nul (113) à une entrée reliée au premier modulateur (100) et à une sortie délivrant un signal déterminant le signe de X, soit sgn(X),
— un second circuit de décision et de reconstruction (120) à une entrée (121) reliée au second démodulateur (104) et à une sortie (122), ce circuit incorporant un second comparateur à seuil nul (123) à

# 0 071 514

une entrée reliée au second démodulateur (104) et à une sortie délivrant un signal déterminant le signal de Y, soit sgn(Y),

ce circuit étant caractérisé par le fait que :

— le premier circuit (110) de décision et de reconstruction délivre sur sa sortie (112) un signal différence $(X-\hat{X})$ où $\hat{X}$ est un signal reconstruit à partir du signal X,

— le second circuit (120) de décision et de reconstruction délivre sur sa sortie (122) un signal différence $(Y-\hat{Y})$, où $\hat{Y}$ est un signal reconstruit à partir du signal Y,

ce circuit étant en outre caractérisé par le fait qu'il comprend :

— un troisième comparateur à seuil nul (114) relié à la sortie (112) du circuit de décision et de reconstruction (110) et déterminant le signe de la différence $X-\hat{X}$, soit sgn$(X-\hat{X})$,

— un quatrième comparateur à seuil nul (124) relié à la sortie (122) du second circuit de décision et de reconstruction (120) et déterminant le signe de la différence $Y-\hat{Y}$, soit sgn$(Y-\hat{Y})$,

— une première porte logique de type OU-exclusif (130) à deux entrées (131, 132), l'une (131) reliée à la sortie du troisième comparateur (114) et recevant sgn$(X-\hat{X})$ et l'autre (132) à la sortie du second comparateur (123) et recevant sgn(Y), cette première porte (130) délivrant, sur une sortie, un signal sgn$(X-\hat{X})$ sgn(Y),

— une seconde porte (134) de type NON-OU-exclusif à deux entrées (135, 136), l'une (135) reliée à la sortie du quatrième comparateur (124) et recevant sgn$(Y-\hat{Y})$ et l'autre (136) à la sortie du premier comparateur (113) et recevant sgn(X), cette seconde porte délivrant sur une sortie un signal -sgn$(Y-\hat{Y})$sgn(X),

— l'additionneur (140) ayant deux entrées, la première reliée à la sortie de la première porte (130), la seconde à la sortie de la seconde porte (134), cet additionneur délivrant sur une sortie un signal sgn$(X-\hat{X})$ sgn$(Y)$-sgn$(Y-\hat{Y})$sgn(X), qui constitue ledit signal d'erreur $\varepsilon(\varphi)$, cette sortie étant reliée à l'entrée (11) de commande de l'oscillateur commandable en tension (10).

2. Circuit selon la revendication 1, caractérisé en ce que le premier et le second circuits de décision et de reconstruction comprennent, dans le cas d'une modulation MAQ 16 :

— trois comparateurs à seuils différents (151, 152, 153) suivis chacun d'une bascule (161, 162, 163),

— un circuit logique (165) relié aux bascules et apte à traduire les états de celles-ci en un nombre à deux éléments binaires $(\alpha, \gamma)$,

— un circuit de reconstruction (170) convertissant les deux dits éléments binaires en un signal reconstruit.

3. Circuit selon la revendication 1, caractérisé en ce que le premier et le second circuits de décision et de reconstruction (110, 120) comprennent chacun, dans le cas d'une modulation MDP 8 :

— un additionneur-soustracteur (180-190),

— deux comparateurs à seuil (181, 182) associés à deux bascules (183, 184) l'un des comparateurs étant relié à l'additionneur/soustracteur,

— un additionneur (186/196) à quatre entrées dont deux sont reliées auxdites bascules, l'une à l'entrée du circuit auquel l'additionneur appartient, et la dernière à une bascule du circuit auquel l'additionneur n'appartient pas.

## Claims

1. Circuit for recovery of a carrier wave from a modulated wave, comprising a voltage controlled oscillator (10) having a command input (11) and an output delivering said carrier wave, a first demodulator (100) having two inputs, one receiving the modulated wave and the other being connected to the output of the oscillator, a second demodulator (104) having two inputs, one receiving the modulated wave and the other being connected to the oscillator across a 90° phase shifter (108), each demodulator delivering a demodulated signal, X from the first and Y from the second, respectively, and means of treating said signals X and Y to generate two signals supplied to an adder (140), which delivers an error signal $\varepsilon(\gamma)$ which is supplied to an input (11) of the oscillator and which is adapted to modify its phase to make it equal to that of the modulated wave, said treatment means comprising :

— a first decision and reconstruction circuit (110) having one input (111) connected to the first demodulator (100) and one output (112), said circuit comprising a zero threshold comparator (113) having one input connected to the first demodulator (100) and one output delivering a signal sgn(X) determining the sign of X,

— a second decision and reconstruction circuit (120) having one input (121) connected to the second demodulator (104) and one output (122), said circuit incorporating a second zero threshold comparator (123) having one input connected to the second demodulator (104) and one output delivering a signal sgn(Y), determining the sign of Y,

said circuit being characterized in that :

— the first decision and reconstruction circuit (110) delivering at its output (112) a difference signal $(X-\hat{X})$ where $\hat{X}$ is a signal reconstructed from signal X,

— the second decision and reconstruction circuit (120) delivers at its output (122) a difference signal $(Y-\hat{Y})$, where $\hat{Y}$ is a signal reconstructed from signal Y,

7

said circuit additionally being characterized in that it comprises :

— a third zero threshold comparator (114) connected to the output (112) of the decision and reconstruction circuit (110) and determining the sign of the difference X-$\hat{X}$, viz sgn(X-$\hat{X}$),

— a fourth zero threshold comparator (124) connected to the output (122) of the second decision and reconstruction circuit (120) and determining the sign of the difference Y-$\hat{Y}$, viz sign(Y-$\hat{Y}$),

— a first exclusive OR logic gate (130) having two inputs (131, 132), one of which (131) is connected to the output of the third comparator (114) and receives sgn(X-$\hat{X}$) and the other (132) is connected to the output of the second comparator (123) and receives sgn(Y), said first gate (130) delivering at an output, a signal sgn(X-$\hat{X}$)sgn(Y),

— a second exclusive NOR gate (134) having two inputs (135, 136), one of which (135) is connected to the output of the fourth comparator (124) and receives sgn(Y-$\hat{Y}$) the other (136) being connected to the first comparator (113) and receiving sgn(X), said second gate delivering at an output a signal -sgn(Y-$\hat{Y}$)sgn(X),

— the adder (140) having two inputs, the first connected to the output of the first gate (130), the second connected to the output of the second gate (134), said adder delivering at an output a signal sgn(X-$\hat{X}$)sgn(Y)-sgn(Y-$\hat{Y}$)sgn(X) which constitutes the said error signal ε(φ), said output being connected to the command input (11) of the voltage controlled oscillator (10).

2. Circuit according to Claim 1, characterized in that the first and second decision and reconstruction circuits comprise, for a modulation MAQ 16 :

— three comparators with different thresholds (151, 152, 153) each followed by a multivibrator (161, 162, 163),

— a logic circuit (165) connected to the multivibrators and adapted to translate the states of the latter into a number having two binary elements (α, γ), and

— a reconstruction circuit (170) converting said two binary elements into a reconstructed signal.

3. Circuit according to Claim 1, characterized in that the first and second decision and reconstruction circuits (110, 120) each comprise, in the case of modulation MDP 8 :

— an up-down counter (180-190),

— two threshold comparators (181, 182) associated with two multivibrators (183, 184), one of the comparators being connected to the up-down counter, and

— an adder (186/196) having four inputs of which two are connected to said multivibrators, one to the input of the circuit containing the adder, and the last to a multivibrator of the circuit not containing the adder.

## Patentansprüche

1. Einrichtung zur Rückgewinnung einer Trägerwelle aus einer modulierten Welle, enthaltend einen spannungsregelbaren Oszillator (10) mit einem Steuereingang (11) und einem die Trägerwelle liefernden Ausgang, einen ersten Demodulator (100) mit zwei Eingängen, von denen der eine die modulierte Welle aufnimmt und der andere mit einem Ausgang des Oszillators verbunden ist, einen zweiten Demodulator (104) mit zwei Eingängen, von denen der eine die modulierte Welle aufnimmt und der andere über einen 90°-Phasenschieber (108) mit dem Oszillator verbunden ist, wobei jeder Demodulator ein demoduliertes Signal X bezüglich des ersten und Y bezüglich des zweiten liefert, und Einrichtungen zum Behandeln dieser Signale X und Y, um zwei Signale hervorzubringen, die einem Addierer (140) zugeführt sind, der ein Fehlersignal ε(φ) abgibt, das dem Eingang (11) des Oszillators zugeführt ist und das dazu bestimmt ist, dessen Phasenlage zu ändern, um sie der der modulierten Welle anzugleichen, wobei diese Behandlungseinrichtungen enthalten :

— einen ersten Entscheidungs- und Wiederherstellungskreis (110) mit einem Eingang (111), der mit dem ersten Demodulator (100) verbunden ist, und einem Ausgang (112), wobei der Schaltkreis einen Nullschwellen-Komparator (113) mit einem Eingang, der mit dem ersten Demodulator (100) verbunden ist, und einen Ausgang aufweist, der ein Signal liefert, das das Vorzeichen von X, genannt sgn(X), bestimmt,

— einen zweiten Entscheidungs- und Wiederherstellungskreis (120) mit einem Eingang (121), der mit dem zweiten Demodulator (104) verbunden ist, und einem Ausgang (122), wobei dieser Schaltkreis einen zweiten Nullschwellen-Komparator (123) aufweist mit einem Eingang, der mit dem zweiten Demodulator (104) verbunden ist und einem Ausgang, der ein Signal liefert, das das Vorzeichen von Y, genannt sgn(Y) angibt,

dadurch gekennzeichnet, daß :

— der erste Entscheidungs- und Wiederherstellungskreis (110) an seinem Ausgang (112) ein Differenzsignal (X-$\hat{X}$) abgibt, wobei $\hat{X}$ ein aus dem Signal X rekonstruiertes Signal ist,

— der zweite Entscheidungs- und Wiederherstellungskreis (120) an seinem Ausgang (122) ein Differenzsignal (Y-$\hat{Y}$) abgibt, wobei $\hat{Y}$ ein aus dem Signal Y rekonstruiertes Signal ist,

und weiterhin dadurch gekennzeichnet, daß der Kreis enthält :

— einen dritten Nullschwellen-Komparator (114), der mit dem Ausgang (112) des Entscheidungs- und Wiederherstellungskreises (110) verbunden ist und das Vorzeichen der Differenz X-$\hat{X}$, genannt sgn(X-$\hat{X}$) angibt,

— einen vierten Nullschwellen-Komparator (124), der mit dem Ausgang (122) des zweiten Entscheidungs- und Wiederherstellungskreises (120) verbunden ist und der das Vorzeichen der Differenz Y-Ŷ, genannt sgn(Y-Ŷ) ermittelt,

— eine erste logische Torschaltung vom Exclusiv-ODER-Typ (130) mit zwei Eingängen (131, 132), von denen der eine (131) mit dem Ausgang des dritten Komparators (114) verbunden ist und sgn(X-X̂) empfängt und der andere (132) mit dem Ausgang des zweiten Komparators (123) verbunden ist und sgn(Y) empfängt, welche erste Torschaltung (130) an einem Ausgang ein Signal sgn(X-X̂)sgn(Y) abgibt,

— eine zweite Torschaltung (134) vom Exclusiv-NICHT-ODER-Typ mit zwei Eingängen (135, 136), von denen der eine (135) mit dem Ausgang des vierten Komparators (124) verbunden ist und sgn(Y-Ŷ) empfängt und der andere (136) mit dem Ausgang des ersten Komparators (113) verbunden ist und sgn(X) empfängt, welche zweite Torschaltung an einem Ausgang ein Signal -sgn(Y-Ŷ)sgn(X) abgibt,

— und daß der Addierer (140) zwei Eingänge aufweist, von denen der erste mit dem Ausgang der ersten Torschaltung (130) und der zweite mit dem Ausgang der zweiten Torschaltung (134) verbunden ist und der an einem Ausgang ein Signal sgn(X-X̂)sgn(Y)-sgn(Y-Ŷ)sgn(X) abgibt, das das genannte Fehlersignal ε(φ) darstellt, welcher Ausgang mit dem Steuereingang (11) des spannungsregelbaren Oszillators (10) verbunden ist.

2. Einrichtung nach Anspruch 1, dadurch gekennzeichnet, daß der erste und der zweite Entscheidungs- und Wiederherstellungskreis im Falle einer Modulation MAQ 16 enthalten :

— drei Komparatoren unterschiedlicher Schwellen (151, 152, 153), die jeweils von einer Kippstufe (161, 162, 163) gefolgt sind,

— einen logischen Kreis (165), der mit den Kippstufen verbunden und dazu eingerichtet ist, die Zustände derselben in eine Zahl mit zwei Binärelementen (α, γ) umzusetzen,

— einen Wiederherstellungskreis (170), der die zwei Binärelemente in ein wiederhergestelltes Signal umwandelt.

3. Einrichtung nach Anspruch 1, dadurch gekennzeichnet, daß der erste und der zweite Entscheidungs- und Wiederherstellungskreis (110, 120) im Falle einer Modulation MDP 8 jeweils enthalten :

— eine Addier-Subtrahier-Stufe (180-190),

— zwei Schwellen-Komparatoren (180, 182), die zwei Kippstufen (183, 184) zugeordnet sind, wobei einer der Komparatoren mit der Addier-Subtrahier-Stufe verbunden ist,

— einen Addierer (186/196) mit vier Eingängen, von denen zwei mit den genannten Kippstufen, einer mit dem Eingang des Schaltkreises, dem der Addierer angehört, und der letzte mit einer Kippstufe jenes Schaltkreises verbunden ist, dem der Addierer nicht angehört.

9

FIG.1

FIG. 2

FIG.4

FIG.3

FIG.5

# FIG.6

# FIG.9

# FIG.7

# FIG.8

FIG.10

FIG.11

FIG.12

0 071 514

FIG.13

FIG.14

7

# FIG.15

FIG.16